# DEMANDE DE BREVET EUROPEEN

(11) **EP 4 502 353 A1**
(43) Date de publication de la demande: **05.02.2025**
(21) Numéro de dépôt: 24191086.8
(22) Date de dépôt: 26.07.2024
(51) Int. Cl.: F02C 7/045, F02C 7/05

(54) **ENTRÉE D'AIR À PAROI D'ÉPAISSEUR ÉVOLUTIVE ET NACELLE ASSOCIÉE**

(30) Priorité: 01.08.2023 FR 2308315
(71) Demandeur: AIRBUS OPERATIONS (S.A.S.), 31060 Toulouse (FR)
(72) Inventeur: GASTALDI, Umberto, 31060 TOULOUSE Cedex 9 (FR); SAUDEL, Brice, 31060 TOULOUSE Cedex 9 (FR); SMITH, Grégoire, 31060 TOULOUSE Cedex 9 (FR); AUBRY, Julien, 31060 TOULOUSE Cedex 9 (FR)
(74) Mandataire: Airbus-OPS SAS

(57) **Abrégé**

La présente invention se rapporte à une entrée d'air permettant d'éviter la présence de raidisseurs ainsi que d'un cadre avant. L'entrée d'air selon la présente invention comprend une lèvre (18), au moins un panneau externe (20) prolongeant la lèvre du côté externe, au moins un panneau interne (22) prolongeant la lèvre du côté interne, la paroi (24) de l'entrée d'air présentant une épaisseur de valeur e. L'épaisseur de la paroi (24) de l'entrée d'air est évolutive longitudinalement et comprend une zone Z2 à l'extrémité longitudinale avant présentant une épaisseur de valeur e2 plus importante que l'épaisseur e. De cette manière, l'épaisseur de l'entrée d'air est optimisée suivant les besoins de la zone considérée. La présente invention concerne également la nacelle et l'ensemble propulsif pourvus d'une telle entrée d'air.

## Description

La présente invention concerne l'entrée d'air pour ensemble propulsif d'aéronef ainsi que la nacelle comprenant une telle entrée d'air et l'ensemble propulsif comportant une telle nacelle.

Un aéronef est propulsé par un ensemble propulsif comprenant un turboréacteur qui est entouré par une nacelle. Dans la plupart des ensembles propulsifs, une nacelle comprend de l'avant vers l'arrière un premier tronçon P1, appelé entrée d'air, en amont du flux aérodynamique ayant pour rôle de capter et de canaliser l'air de façon à assurer un écoulement vers la soufflante du turboréacteur ainsi qu'un deuxième tronçon P2, appelé partie principale, constituant le reste de la nacelle.

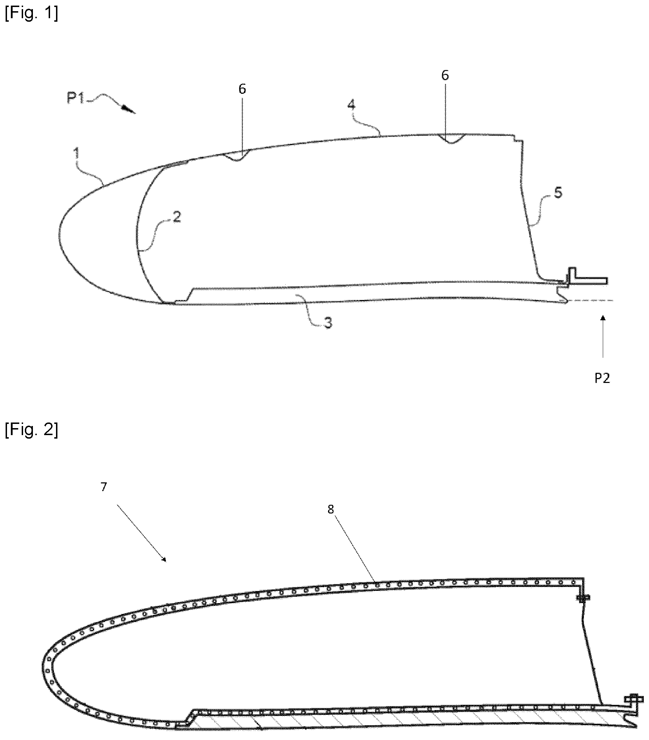

Le brevet FR3099750 déposé par Airbus Operations SAS décrit une entrée d'air P1 telle que celle illustrée sur la figure 1. Une entrée d'air P1 comprend une lèvre 1 d'entrée d'air disposée à l'extrémité avant et permettant de capter l'air nécessaire à l'alimentation du moteur. Des panneaux internes 3 prolongent la lèvre à l'intérieur de la nacelle. Des panneaux externes 4 prolongent la lèvre à l'extérieur de la nacelle. L'entrée d'air P1 comprend usuellement des éléments de structure tels qu'un cadre avant 2 et un cadre arrière 5. Les panneaux 3 et 4 sont portés par le cadre avant 2 et le cadre arrière 5. La lèvre 1 d'entrée d'air est portée par le cadre 2. Le cadre 5 définit la limite entre l'entrée d'air P1 et la partie principale P2 de la nacelle. Des raidisseurs 6 en plus des cadres 2 et 5 sont prévus sur les panneaux externes 4 pour rigidifier la structure de l'entrée d'air et lui conférer une résistance suffisante nécessaire aux efforts et chocs auxquels elle est soumise tels que des chocs à oiseau par exemple.

Le brevet FR3083777 propose une entrée d'air 7, représentée sur la figure 2, présentant des secteurs monoblocs 8 pour en faciliter la conception et la maintenance et limiter son impact sur la trainée. Aucun cadre avant n'est prévu, la rigidification étant apportée par l'aspect monobloc.

La présente invention vise à aller encore plus loin en supprimant le cadre avant et les raidisseurs.

A cet effet, la présente invention concerne une entrée d'air comprenant une lèvre, au moins un panneau externe prolongeant la lèvre du côté externe, au moins un panneau interne prolongeant la lèvre du côté interne, la paroi de l'entrée d'air présentant une épaisseur de valeur e, caractérisé en ce que l'épaisseur de la paroi de l'entrée d'air est évolutive longitudinalement et comprend une zone Z2 à l'extrémité longitudinale avant présentant une épaisseur de valeur e2 plus importante que l'épaisseur e.

L'entrée d'air à paroi d'épaisseur évolutive permet ainsi de pallier au retrait du cadre avant et des raidisseurs et d'offrir la rigidité nécessaire aux contraintes subies.

L'invention prévoit au moins l'une des caractéristiques optionnelles suivantes, prises isolément ou en combinaison.

L'entrée d'air comprend une zone Z4 de traitement acoustique au niveau de la face interne de l'entrée d'air au-delà de la zone Z2 présentant une épaisseur e2 plus faible que l'épaisseur e.

L'entrée d'air comporte une zone Z3 intermédiaire disposée entre la zone Z2 avant et la zone Z4 de traitement acoustique présentant une épaisseur sensiblement non évolutive e.

L'entrée d'air comprend au moins une zone Z5 de jonction adjacente à la jonction entre deux parois formant l'ensemble de la paroi de l'entrée d'air, présentant une épaisseur sensiblement non évolutive de valeur e.

L'épaisseur e2 de la zone Z2 est évolutive et maximale au niveau de la ligne transverse extrémale longitudinalement B.

L'évolution de l'épaisseur de la zone Z2 longitudinalement est identique de part et d'autre de la ligne B et diminue d'une valeur e2 au niveau de la ligne B à une valeur e aux extrémités longitudinales de la zone Z2.

L'épaisseur e2 maximale au niveau de la ligne extrémale B de la zone Z2 présente une valeur supérieure entre 30 et 50% à celle de l'épaisseur e.

L'épaisseur e4 de la zone Z4 présente une valeur inférieure entre 30 et 50% à celle de l'épaisseur e.

La présente invention concerne également une nacelle comprenant une telle entrée d'air.

La présente invention concerne également un aéronef pourvu d'une telle nacelle.

D'autres buts, caractéristiques et avantages ressortiront de la description de l'invention qui va suivre, description donnée à titre d'exemple uniquement non limitatif, en référence aux dessins ci-annexés dans lesquels :
[Fig. 1] est une vue schématique latérale d'une section longitudinale d'une entrée d'air à cadres avant et arrière ainsi que raidisseurs selon une forme de réalisation de l'art antérieur ;
[Fig. 2] est une vue schématique latérale d'une section longitudinale d'une entrée d'air à secteurs monoblocs selon une autre forme de réalisation de l'art antérieur ;
[Fig. 3] est une vue latérale d'un aéronef pourvu d'une entrée d'air selon la présente invention ;
[Fig. 4] est une vue en perspective d'un ensemble propulsif pourvu d'une nacelle selon la présente invention présentant deux parties mises en exergue ;
[Fig. 5] est une vue schématique latérale d'une section longitudinale d'une entrée d'air à paroi d'épaisseur évolutive selon la présente invention.

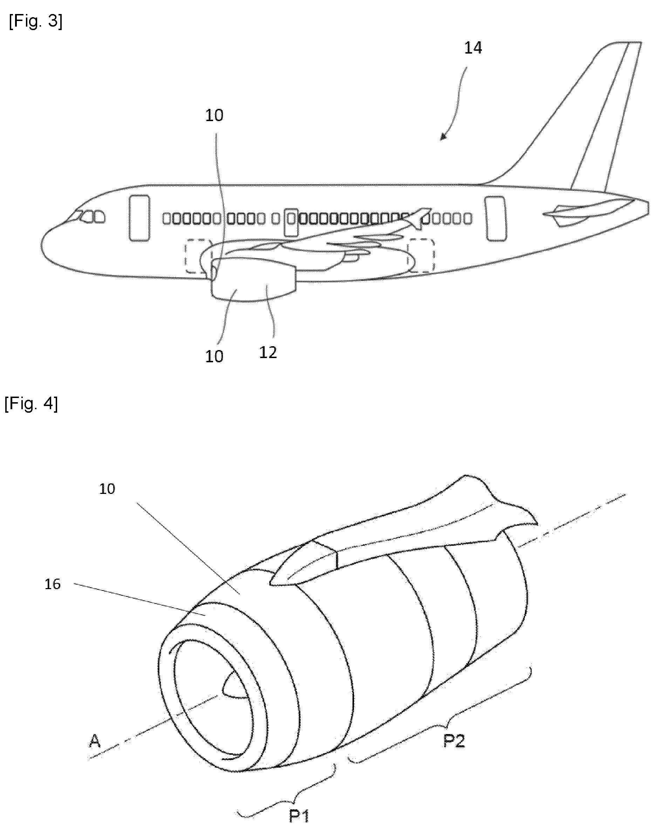

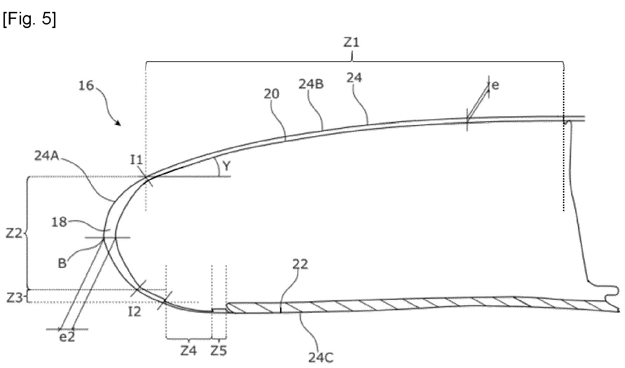

Comme représenté sur les figures 3 et 4, la présente invention se rapporte à une nacelle 10 d'un ensemble propulsif 12 d'un aéronef 14.

Comme dans la plupart des ensemble propulsifs et explicité plus haut, la nacelle 10 telle que représentée sur la figure 4 comprend de l'avant vers l'arrière un premier tronçon, appelé entrée d'air P1 et référencée 16, en amont du flux aérodynamique ayant pour rôle de capter et de canaliser l'air de façon à assurer un écoulement vers la soufflante ainsi qu'un deuxième tronçon, appelé partie principale P2, constituant le reste de la nacelle. L'entrée d'air 16 présente une forme circonférentielle annulaire.

L'ensemble propulsif 12 et en particulier la nacelle 10 s'étend autour d'un axe longitudinal appelé axe longitudinal A. L'axe A est l'axe de la surface de révolution de l'entrée d'air 16. L'expression "longitudinalement" fait référence à une direction parallèle à l'axe central A de l'entrée d'air. Un "plan longitudinal" est un plan contenant l'axe central A de l'entrée d'air. La notion d'avant et d'arrière, d'antérieur et de postérieur, d'amont et d'aval se comprennent dans toute la description qui suit selon la direction du flux d'air dans l'ensemble propulsif : l'air rentre par l'avant de l'ensemble propulsif à savoir par l'entrée d'air P1 et ressort par l'arrière à savoir l'extrémité arrière du deuxième tronçon P2. Les expressions "direction transversale" et "transversalement" font référence à une direction qui s'étend dans un plan transversal de l'entrée d'air, c'est-dire une direction qui est orthogonale à l'axe central A de l'entrée d'air.

L'entrée d'air 16 comprend une lèvre 18 d'entrée d'air disposée à l'extrémité avant et permettant de capter l'air nécessaire à l'alimentation du moteur. Des panneaux externes 20 prolongent la lèvre à l'extérieur de la nacelle et forment une paroi externe. Des panneaux internes 22 prolongent la lèvre à l'intérieur de la nacelle et forment une paroi interne. Les panneaux 20 et 22 délimitent un conduit intérieur permettant de canaliser l'air vers une soufflante non représentée.

Comme représenté en section longitudinale sur la figure 5, la paroi 24 de l'entrée d'air 16 formée par la paroi 24A de la lèvre 18 et la paroi 24B du panneau 20 sont continues, i.e. monobloc longitudinalement. Transversalement l'entrée d'air 16 peut être faite d'un seul tenant ou de plusieurs segments circonférentiels fixés les uns aux autres. Dans la forme de réalisation illustrée, il existe une jonction entre la paroi 24A et la paroi 24C.

La paroi 24 de l'entrée d'air selon la présente invention comprend une épaisseur évolutive longitudinalement optimisée suivant les contraintes au niveau considéré. Ainsi la paroi 24 présente plusieurs zones Z1, Z2, Z3, Z4, Z5 successives longitudinalement d'épaisseurs différentes d'une zone à la zone adjacente suivante. Les zones Z1, Z3, Z4, Z5 présentent des épaisseurs sensiblement identiques sur la majorité de leur longueur (longitudinalement) voire toutes leur longueur (sans considérer leurs extrémités longitudinales). La zone Z2 en revanche a une épaisseur évolutive d'une extrémité à l'autre longitudinalement : l'épaisseur croit d'une valeur e à une valeur e2 puis décroit de la valeur e2 à la valeur e. Au niveau de la zone Z2 se trouve la ligne B transverse, extrémale longitudinalement. L'évolution de la croissance de l'épaisseur est telle que la valeur e2 est atteinte au niveau de la ligne extrémale B. Selon la présente forme de réalisation illustrée sur la figure 5, les longueurs de la zone Z2 de part et d'autre de la ligne B jusqu'aux zones respectivement Z1 et Z3 (longitudinalement) sont identiques. Selon d'autres formes de réalisation, des longueurs différentes peuvent être prévues.

L'entrée d'air 16 présente une zone située à l'extrémité avant longitudinalement, appelée zone avant Z2, une zone adjacente s'étendant à partir de la zone Z2 du côté des panneaux 20 externes, appelée zone externe Z1, une zone adjacente à la zone avant Z2 et s'étendant vers les panneaux internes 22 jusqu'à une zone Z4, appelés zone interne Z3 intermédiaire, la zone Z4 adjacente à la zone Z3 intermédiaire jusqu'à une zone Z5, appelée zone de traitement acoustique spécifique Z4, et la dernière zone Z5 adjacente à la zone Z4 jusqu'à la paroi 24C, appelée zone de jonction Z5.

La zone Z2 avant présente au niveau de la ligne B une épaisseur e2 plus importante que celles des zones adjacentes Z1 et Z3 car cette zone avant Z2 est la plus exposée et donc la plus susceptible de subir des dommages provenant d'impact tel qu'un choc à l'oiseau, débris de tout type, grêle ... Ainsi l'épaisseur e2 de la paroi 24 au niveau de la zone avant Z2 est plus grande de 30 à 50% que l'épaisseur e de la paroi au niveau de la zone externe Z1 adjacente et que l'épaisseur e de la paroi au niveau de la zone Z3 intermédiaire adjacente. Le positionnement de la ligne transversale I1 limite entre la zone Z1 et la zone Z2 ainsi que celle I2 entre la zone Z2 et Z3 est déterminé par l'angle Y entre la tangente dans un plan longitudinal à la surface de la paroi 24 au niveau des lignes I1, I2 et l'axe A : l'angle est sensiblement identique au niveau des lignes I1 et I2 et il est supérieur à 15 degrés. Dans la forme de réalisation illustrée, l'angle est supérieur à 20 degrés ce qui est un bon compromis pour renforcer la zone la plus exposée aux chocs et ne pas pénaliser la masse en augmentant son épaisseur sur une trop large surface.

Les zones Z1, Z3 et Z5 présentent la même épaisseur e qui est une épaisseur permettant d'intégrer des fixations. La zone de jonction Z5 permettant la jonction entre la paroi 24A et la paroi 24C nécessite l'emploi de fixations et donc de perçages ce qui oblige à une épaisseur suffisante et donc une épaisseur de valeur e. L'épaisseur e est également l'épaisseur classique de la nacelle permettant des réparations par patches nécessitant l'utilisation de fixations.

La zone Z1 même si elle ne se trouve pas à l'avant de la nacelle reste une zone exposée et pourrait donc présenter suivant d'autres formes de réalisation une épaisseur plus grande que les autres zones à l'exception de la zone Z2 qui aura toujours l'épaisseur la plus importante.

La zone Z4 de traitement acoustique spécifique se trouve au niveau interne à la nacelle : ainsi elle présente moins de contraintes structurelles et de contraintes vis-à-vis des impacts mentionnés plus haut. En revanche, les besoins en atténuation acoustique sont plus importants. Aussi il est possible de prévoir un traitement acoustique particulier. Il est à noter qu'aucune fixation n'est prévue à ce niveau. De ce fait, la zone Z4 présente une épaisseur e4 plus faible que l'épaisseur e ce qui va permettre l'application d'un panneau acoustique. Dans la forme de réalisation illustrée, l'épaisseur e4 de la zone Z4 présente une valeur inférieure entre 30 et 50% à celle de l'épaisseur e.

Selon une forme de réalisation spécifique illustrant une série d'épaisseurs possibles, les zones Z1, Z3 et Z5 présentent une épaisseur e de 2,125 millimètres. La zone Z2 avant présente une épaisseur e2 plus importante de 3 millimètres et la zone Z4 de traitement acoustique une épaisseur e4 plus faible de 1,6 millimètres. La zone Z1 externe comme vu plus haut étant une face externe peut avoir une épaisseur un peu plus importante que celle des zones Z3 et Z5 de 2,15 millimètres. Cependant pour permettre une diminution progressive de l'épaisseur de la zone Z2 avant plus épaisse à la zone Z4 de traitement acoustique plus fine, la zone Z3 intermédiaire peut présenter une épaisseur plus importante que celle de la paroi au niveau des zones Z1 ou Z5 d'environ 2,2 millimètres.

Les différentes épaisseurs de la paroi sont obtenues par usinage après formage de la paroi 24.

La présente invention permet d'augmenter la résistance de la paroi tout en optimisant les performances (poids, acoustique ...) de l'entrée d'air et simplifiant la fabrication de celle-ci à un coût réduit.

## Revendications

1. Entrée d'air comprenant une lèvre (18), au moins un panneau externe (20) prolongeant la lèvre du côté externe, au moins un panneau interne (22) prolongeant la lèvre du côté interne, la paroi (24) de l'entrée d'air présentant une épaisseur de valeur e, **caractérisé en ce que** l'épaisseur de la paroi (24) de l'entrée d'air est évolutive longitudinalement et comprend une zone Z2 à l'extrémité longitudinale avant présentant une épaisseur de valeur e2 plus importante que l'épaisseur e.

2. Entrée d'air selon la revendication 1, **caractérisé en ce que** l'entrée d'air comprend une zone Z4 de traitement acoustique au niveau de la face interne de l'entrée d'air au-delà de la zone Z2 présentant une épaisseur e4 plus faible que l'épaisseur e.

3. Entrée d'air selon la revendication 2, **caractérisé en ce qu'**elle comporte une zone Z3 intermédiaire disposée entre la zone Z2 avant et la zone Z4 de traitement acoustique présentant une épaisseur sensiblement non évolutive e.

4. Entrée d'air selon l'une des revendications 1 à 3, **caractérisé en ce que** l'entrée d'air comprend au moins une zone Z5 de jonction adjacente à la jonction entre une paroi (24a, 24b) et une paroi (24c) présentant une épaisseur sensiblement non évolutive de valeur e, la paroi (24a, 24b) et la paroi (24c) formant l'ensemble de la paroi (24) de l'entrée d'air.

5. Entrée d'air selon l'une des revendications 1 à 4, **caractérisé en ce que** l'épaisseur e2 de la zone Z2 est évolutive et maximale au niveau de la ligne transverse extrémale longitudinalement B.

6. Entrée d'air selon la revendication 5, **caractérisé en ce que** l'évolution de l'épaisseur de la zone Z2 longitudinalement est identique de part et d'autre de la ligne B et diminue d'une valeur e2 au niveau de la ligne B à une valeur e aux extrémités longitudinales de la zone Z2.

7. Entrée d'air selon l'une des revendications 1 à 6, **caractérisé en ce que** l'épaisseur e2 maximale au niveau de la ligne extrémale B de la zone Z2 présente une valeur supérieure entre 30 et 50% à celle de l'épaisseur e.

8. Entrée d'air selon la revendication 2, **caractérisé en ce que** l'épaisseur e4 de la zone Z4 présente une valeur inférieure entre 30 et 50% à celle de l'épaisseur e.

9. Nacelle comprenant une entrée d'air selon l'une des revendications 1 à 8.

10. Ensemble propulsif pour aéronef pourvu d'une nacelle selon la revendication 9.
